# FASCICULE DE BREVET EUROPEEN

(11) **EP 2 206 896 B1**
(45) Date de publication et mention de la délivrance du brevet: **06.07.2016**
(21) Numéro de dépôt: 09178806.7
(22) Date de dépôt: 11.12.2009
(51) Int. Cl.: F01N 3/04, F02F 1/24, F01N 13/10

(54) **Dispositif de refroidissement de collecteur d'échappement intégré à la culasse d'un moteur de véhicule**
Kühlungsvorrichtung eines im Zylinderkopf integrierten Abgaskrümmers
Cooling arrangement of an exhaust manifold integrated in the cylinder head

(30) Priorité: 09.01.2009 FR 0950090
(43) Date de publication de la demande: 14.07.2010
(73) Titulaire: Peugeot Citroën Automobiles SA, 78140 Vélizy-Villacoublay (FR); GM Global Technology Operations LLC, Detroit, MI 48265-3000 (US)
(72) Inventeur: Reaubourg, Cyril, 95390 Saint Prix (FR)
(74) Mandataire: Fernandez, Francis Lionel

(56) Documents cités:
- EP-A- 1 006 272
- WO-A-93/18285
- US-A1- 2008 314 339

## Description

La présente invention concerne un dispositif de refroidissement de collecteur d'échappement intégré à la culasse d'un moteur de véhicule, en particulier d'un moteur de véhicule automobile. Elle concerne aussi une culasse à collecteur d'échappement intégré, munie d'un tel dispositif de refroidissement et destinée à un véhicule.

La culasse est la partie supérieure, le plus souvent démontable, d'un moteur à pistons alternatifs. La partie haute du moteur ne comprend pas seulement la culasse, mais aussi, notamment, le répartiteur d'admission, dont la fonction est de distribuer l'air sur les cylindres du moteur, et le collecteur d'échappement, qui a pour fonction de guider les gaz issus du moteur de la sortie des cylindres vers le système d'échappement.

Les cylindres, région où prend naissance une grande quantité de chaleur, et le colleteur d'échappement doivent être refroidis par eau ou par air.

Le document FR 2 547 864 décrit, par exemple, un moteur diesel à refroidissement par eau utilisable comme moteur marin hors-bord. Il comporte une tête de cylindre et un bloc-cylindre, qui sont construits de façon monobloc en aluminium ou en alliage léger à base d'aluminium. Une enveloppe d'eau de refroidissement, des orifices d'admission et des orifices d'échappement sont formés dans la tête de cylindre et le bloc-cylindre.

Le document FR 2 727 466 décrit un collecteur d'échappement pour moteur à combustion interne multicylindre destiné à réunir l'entrée d'une ligne d'échappement aux ouvertures de sortie d'une pluralité de conduits d'échappement agencés dans la culasse. Le dispositif comprend un boîtier oblong présentant une vaste cavité intérieure dans laquelle peuvent librement circuler les gaz brûlés entre, d'une part, une pluralité de passages d'entrée ménagés à travers une paroi latérale du boîtier et destinés à être positionnés en correspondance avec les ouvertures de sortie desdits conduits d'échappement et, d'autre part, une unique ouverture de sortie destinée à être raccordée à la ligne d'échappement.

On connaît déjà des collecteurs d'échappement qui sont partiellement ou totalement intégrés à la culasse du moteur, de façon à améliorer les échanges thermiques, à réduire considérablement l'encombrement et, par conséquent, les coûts.

A titre d'exemple, le document FR 2 738 289 décrit un dispositif d'échappement pour moteur à combustion interne multicylindre comprenant des conduits d'échappement ménagés dans la culasse du moteur, un collecteur d'échappement et une ligne d'échappement, qui est munie d'un pot catalytique. Chacun des conduits d'échappement met en communication une chambre de combustion avec la face latérale d'échappement de la culasse sur laquelle vient se fixer le collecteur d'échappement. Les conduits d'échappement débouchent dans une cavité de volume adapté. Cette cavité est divisée en deux parties portées respectivement par la culasse et le collecteur d'échappement.

Un autre exemple est constitué par le document FR 2 902 827, qui décrit également un dispositif d'échappement pour moteur à combustion interne multicylindre. Dans la culasse du moteur sont agencés des conduits d'échappement. Une première extrémité de chacun de ces conduits est reliée à une chambre de combustion du moteur et la seconde extrémité débouche dans une cavité ou plénum d'un collecteur d'échappement intégré à la culasse. Un conduit de sortie de la culasse est relié extérieurement à un dispositif de dépollution des gaz d'échappement. La cavité du collecteur est formée dans un élément rapporté à l'intérieur de la culasse et cet élément est découplé thermiquement de la culasse par l'intermédiaire de moyens de découplage thermique. Le document US 2008/0314339 A1 décrit aussi un tel dispositif.

Le but de la présente invention est de fournir un dispositif de refroidissement de collecteur d'échappement intégré à la culasse d'un moteur de véhicule, en particulier d'un moteur de véhicule automobile, qui permette d'éviter les risques de point chaud sur le collecteur par décollement dans une veine d'eau de refroidissement.

Un autre but de la présente invention est de fournir un tel dispositif de refroidissement, qui permette d'obtenir une plus grande vitesse de la circulation d'eau de refroidissement.

Un autre but de la présente invention est de fournir un tel dispositif de refroidissement, qui soit de conception et de mise en oeuvre simples, et qui soit économique, notamment en permettant de réaliser un gain de matière sur le collecteur d'échappement.

Pour parvenir à ces buts, la présente invention a pour objet un dispositif de refroidissement de collecteur d'échappement intégré à la culasse d'un moteur de véhicule, en particulier d'un moteur de véhicule automobile, et ce dispositif de refroidissement est constitué par la circulation d'une lame d'eau d'épaisseur sensiblement constante réalisée autour des conduits d'échappement dudit collecteur d'échappement, de façon à éviter des décollements dans chaque veine d'eau sur la surface tournée vers le collecteur d'échappement, ce qui a pour résultat d'éviter tout point chaud parce que non refroidi.

La lame d'eau d'épaisseur sensiblement constante suit la forme extérieure des conduits d'échappement, de sorte que la lame d'eau autour des conduits d'échappement présente la même forme que lesdits conduits d'échappement.

Selon l'invention, la lame d'eau est créée par la forme d'un passage d'eau dont la section présente une épaisseur sensiblement constante et égale à l'épaisseur de la lame d'eau.

Selon l'invention également, le passage d'eau est séparé du conduit d'échappement qu'il refroidit par une paroi d'épaisseur sensiblement constante.

Dans un mode particulier de réalisation non limitatif de l'objet et de la portée de l'invention, la lame d'eau présente une épaisseur de 6mm.

De préférence, l'épaisseur de la paroi séparant le passage d'eau de conduit d'échappement est sensiblement égale à l'épaisseur de la lame d'eau.

La présente invention a également pour objet une culasse à collecteur d'échappement intégré, munie d'un dispositif de refroidissement tel que celui décrit ci-dessus dans ses grandes lignes.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue en perspective d'une culasse à collecteur d'échappement intégré,
- la figure 2 est une coupe transversale d'un conduit d'échappement et de son passage d'eau de refroidissement, selon l'art antérieur,
- la figure 3 est une coupe transversale d'un conduit d'échappement et de son passage d'eau de refroidissement, selon la présente invention,
- la figure 4 représente la forme des conduits d'échappement du collecteur d'échappement, et
- la figure 5 illustre, de manière schématique, la forme enveloppe de la lame d'eau autour du collecteur d'échappement, selon la présente invention.

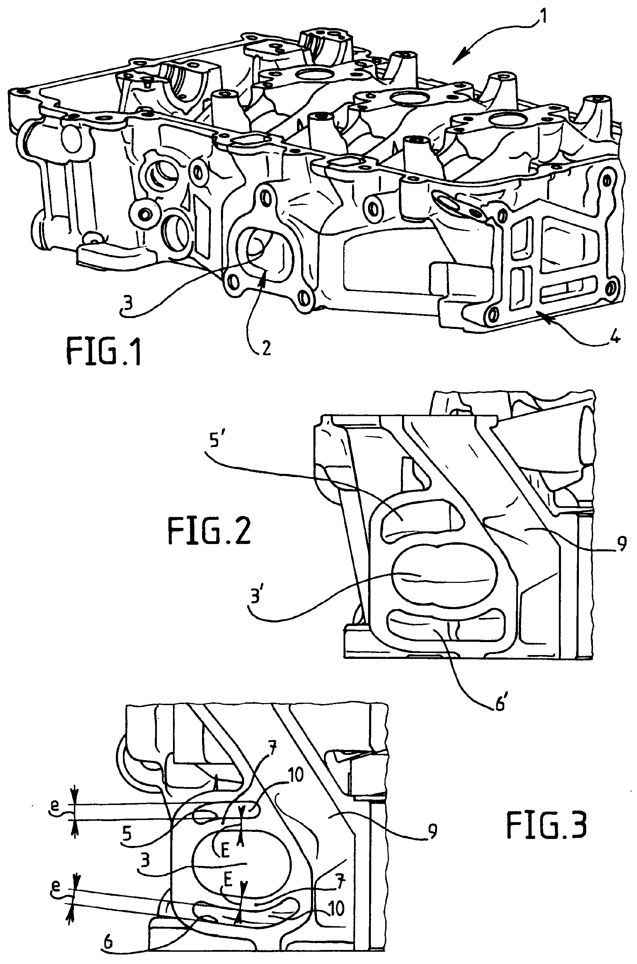

En référence au dessin de la figure 1, on a représenté une culasse, de référence générale 1, à collecteur d'échappement intégré. Par collecteur d'échappement intégré, on entend un collecteur « monobloc » avec la culasse 1 et réalisé ensemble avec la culasse par une même opération de moulage, par exemple de moulage par injection.

La référence 2 désigne la sortie du collecteur d'échappement, et la référence 3 désigne un des conduits d'échappement formant le collecteur. Dans l'exemple représenté sur la figure 1, le collecteur d'échappement rassemble trois conduits d'échappement, dont un seul, à savoir le conduit 3, est visible sur la figure. Un circuit de refroidissement par eau est prévu pour refroidir les cylindres où prend naissance une grande quantité de chaleur. Injectée par une pompe, l'eau de refroidissement circule autour des cylindres (non représentés), les refroidit, puis poursuit son chemin dans la culasse 1. La référence 4 désigne la sortie de ce chemin le boîtier de sortie d'eau.

La circulation d'eau refroidit aussi le collecteur d'échappement. Comme représenté sur le dessin de la figure 2, de manière classique et connue en soi, la circulation d'eau autour d'un conduit d'échappement référencé 3' se fait dans les passages d'eau supérieur et inférieur, référencés respectivement 5' et 6'. Ces passages présentent des sections évolutives, notamment des sections transversales évolutives, qui ont pour résultat de créer des risques de décollement de la lame d'eau de refroidissement, par conséquent des risques de point non refroidi, donc de point chaud pouvant entraîner des problèmes thermomécaniques.

La référence 9 désigne un conduit d'huile.

Selon le principe de la présente invention, en référence au dessin de la figure 3, on a configuré les passages d'eau 5 et 6 de manière à réaliser une lame d'eau de refroidissement autour des conduits d'échappement, par exemple le conduit d'échappement référencé 3, qui soit une lame d'eau d'épaisseur constante référencée « e ». Selon la valeur de cette épaisseur « e » », on améliore et on vient même augmenter la vitesse de passage de l'eau.

Il importe de noter que, conformément à la présente invention, la lame d'eau, de référence générale 10, d'épaisseur « e » sensiblement constante, suit la forme du conduit d'échappement 3, de sorte que la lame d'eau 10 autour du conduit d'échappement présente la même forme que le conduit d'échappement 3. On réalise ainsi une véritable « homothétie » de la veine de gaz d'échappement avec une circulation d'eau d'épaisseur « e » choisie. A titre d'exemple, cette épaisseur de la lame d'eau peut être de l'ordre de 6 mm.

La lame d'eau 10 est créée par un passage d'eau 5, 6 dont la section transversale présente une épaisseur sensiblement constante et égale à l'épaisseur « e » de la lame d'eau 10.

Le passage d'eau 5, 6 est séparé du conduit d'échappement 3 qu'il refroidit par une paroi 7 d'épaisseur constante « E », qui est, de préférence, sensiblement égale à l'épaisseur « e » de la lame d'eau 10.

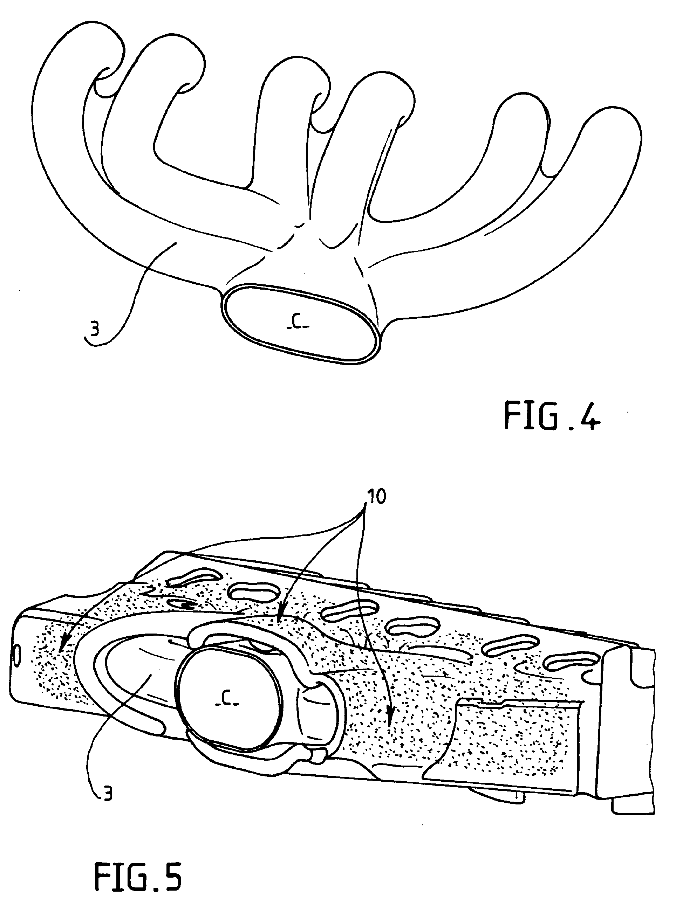

La figure 4 représente la forme des conduits d'échappement du collecteur d'échappement, référencé C, intégré à la culasse.

La figure 5 montre, de manière schématique, la lame d'eau 10 d'épaisseur sensiblement constante qui « épouse » la forme des conduits d'échappement du collecteur d'échappement C, selon la présente invention.

La zone de lame d'épaisseur constante concerne les conduits d'échappement et la bride, soit près de 80% du collecteur intégré C.

En variante, il est possible de concevoir des passages 5 et 6, qui présentent non seulement une épaisseur constante, mais aussi la même section. Dans une telle hypothèse, le refroidissement du conduit d'échappement est plus homogène.

Il va de soi que l'épaisseur de 6mm donnée ci-dessus pour les passages d'eau et, par conséquent, pour la lame d'eau peut être modifiée sans sortir du cadre de la présente invention.

Le dispositif de refroidissement décrit ci-dessus présente de nombreux avantages, parmi lesquels les avantages suivants :
- grâce à l'épaisseur sensiblement constante du film d'eau, il permet d'éviter les décollements dans chaque veine d'eau sur la face tournée vers le collecteur d'échappement et, par conséquent, d'éviter les risques de point chaud, c'est-à-dire de point non refroidi,
- il améliore de façon générale le passage d'eau de refroidissement,
- il permet un gain de vitesse de la circulation d'eau, ce qui limite aussi les zones de rétention d'air,
- il est de conception simple et de réalisation aisée,
- il est économique, en particulier il permet de réaliser un gain matière, parce que les formes des parois et des passages d'eau autour des conduits d'échappement sont sensiblement des « homothéties ».

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention telle que définie par les revendications.

## Revendications

1. Dispositif de refroidissement du collecteur d'échappement intégré à la culasse (1) d'un moteur de véhicule, en particulier d'un moteur de véhicule automobile, constitué par la circulation d'une lame d'eau (10) d'épaisseur (« e ») sensiblement constante réalisée autour des conduits d'échappement (3) dudit collecteur d'échappement, de façon à éviter des décollements dans chaque veine d'eau sur la surface tournée vers le collecteur d'échappement, ce qui a pour résultat d'éviter tout point chaud parce que non refroidit, **caracterisé en ce que** ladite lame d'eau (10) d'épaisseur (« e ») sensiblement constante suivant la forme extérieure des conduits d'échappement (3), de sorte que la lame d'eau (10) autour des conduits d'échappement présente la même forme que lesdits conduits d'échappement (3), et **en ce que en ce que** le passage d'eau (5, 6) est séparé du conduit d'échappement (3) qu'il refroidit par une paroi (7) d'épaisseur constante (« E »).

2. Dispositif de refroidissement selon la des revendication 1, **caractérisé en ce que** ladite lame d'eau (10) est créée par la forme d'un passage d'eau (5, 6) dont la section présente une épaisseur sensiblement constante et égale à l'épaisseur (« e ») de la lame d'eau (10).

3. Dispositif de refroidissement selon l'une quelconque des revendications précédentes, **caractérisé en ce que** ladite lame d'eau (10) présente une épaisseur de l'ordre de 6mm.

4. Dispositif de refroidissement selon la revendication 3, **caractérisé en ce que** l'épaisseur (« E ») de ladite paroi est sensiblement égale à l'épaisseur (« e ») de ladite lame d'eau (10).

5. Culasse à collecteur d'échappement intégré, destinée à un moteur de véhicule, en particulier de véhicule automobile, **caractérisée en ce qu'**elle comporte un dispositif de refroidissement conforme à l'une quelconque des revendications précédentes.

## Patentansprüche

1. Kühlvorrichtung für den Abgaskrümmer, der in den Zylinderkopf (1) eines Fahrzeugmotors, im Speziellen eines Kraftfahrzeugmotors integriert ist, die durch die Zirkulation eines Wasser-Schwallstrahls (10) mit einer in etwa konstanten Stärke ("e") gebildet wird, die um die Abgasleitungen (3) des besagten Abgaskrümmers erfolgt, um Ablösungen in jeder Wasserader an der zum Abgaskrümmer gewandten Oberfläche zu vermeiden, was zur Folge hat, dass alle heißen, weil nicht gekühlten Stellen vermieden werden, **dadurch gekennzeichnet, dass** der besagte Wasser-Schwallstrahl (10) mit einer in etwa konstanten Stärke ("e") der äußeren Form der Abgasleitungen (3) folgt, sodass der Wasser-Schwallstrahl (10) um die Abgasleitungen dieselbe Form aufweist, wie die besagten Abgasleitungen (3), und dadurch, dass die Wasserdurchführung (5, 6) von der Abgasleitung (3), die sie kühlt, durch eine Wand (7) mit der konstanten Stärke ("E") getrennt ist.

2. Kühlvorrichtung nach Anspruch 1, **dadurch gekennzeichnet, dass** der besagte Wasser-Schwallstrahl (10) durch die Form einer Wasserdurchführung (5, 6) kreiert wird, deren Querschnitt eine in etwa konstante Stärke gleich der Stärke ("e") des Wasser-Schwallstrahls (10) aufweist.

3. Kühlvorrichtung nach irgendeinem der vorherigen Ansprüche, **dadurch gekennzeichnet, dass** der besagte Wasser-Schwallstrahl (10) eine Stärke in der Größenordnung von 6 mm aufweist.

4. Kühlvorrichtung nach Anspruch 3, **dadurch gekennzeichnet, dass** die Stärke ("E") der besagten Wand in etwa gleich der Stärke ("e") des besagten Wasser-Schwallstrahls (10) ist.

5. Zylinderkopf mit integriertem Abgaskrümmer, der für einen Fahrzeugmotor, im Speziellen für ein Kraftfahrzeug bestimmt ist, **dadurch gekennzeichnet, dass** er eine Kühlvorrichtung nach irgendeinem der vorherigen Ansprüche umfasst.

## Claims

1. Device for cooling the exhaust manifold integrated in the cylinder head (1) of a vehicle engine, in particular of a car engine, formed by the circulation of a layer of water (10) of substantially constant thickness ("e") produced round the exhaust ducts (3) of said exhaust manifold, so as to prevent detachments in each stream of water on the surface turned towards the exhaust manifold, which results in preventing any hot spot because it is not cooled, **characterised in that** said layer of water (10) of substantially constant thickness ("e") following the external shape of the exhaust ducts (3), so that the layer of water (10) around the exhaust ducts has the same form as said exhaust ducts (3), and **in that** the water passage (5, 6) is separated from the exhaust duct (3) that it cools by a wall (7) of constant thickness ("E").

2. Cooling device according to claim 1, **characterised in that** said layer of water (10) is created by the shape of a water passage (5, 6), the cross section of which has a substantially constant thickness equal to the thickness ("e") of the layer of water (10).

3. Cooling device according to either one of the preceding claims, **characterised in that** said layer of water (10) has a thickness of around 6 mm.

4. Cooling device according to claim 3, **characterised in that** the thickness ("E") of said wall is substantially equal to the thickness ("e") of said layer of water (10).

5. Cylinder head with an integrated exhaust manifold, intended for a motor vehicle, in particular a car, **characterised in that** it comprises a cooling device according to any one of the preceding claims.
